# EUROPÄISCHE PATENTSCHRIFT

(11) **EP 3 227 188 B1**
(45) Veröffentlichungstag und Bekanntmachung des Hinweises auf die Patenterteilung: **29.05.2019**
(21) Anmeldenummer: 15816712.2
(22) Anmeldetag: 14.12.2015
(51) Int. Cl.: B65B 35/44, B65B 25/06, B65B 5/12, A22C 17/00, B26D 7/32, B65G 54/02, B65G 47/08, B65G 47/71, B65B 35/36, B65B 57/14

(54) **FÖRDERVORRICHTUNG MIT PORTIONSÜBERGABE**
CONVEYING DEVICE HAVING PORTION TRANSFER
DISPOSITIF DE TRANSPORT MUNI D'UN SYSTÈME DE TRANSFERT DE PORTIONS

(30) Priorität: 18.12.2014 DE 102014118978
(43) Veröffentlichungstag der Anmeldung: 11.10.2017
(73) Patentinhaber: Weber Maschinenbau GmbH Breidenbach, 35236 Breidenbach (DE)
(72) Erfinder: BURK, Alexander, 35232 Dautphetal (DE); ECKHARDT, Christoph, 35236 Breidenbach (DE); GERLACH, Jochen, 35232 Dautphetal (DE); NICHAU, Marco, Bad Laasphe 57334 (DE); NISPEL, Thomas, 35232 Dautphetal (DE); ROTHER, Ingo, 35236 Breidenbach (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB
(86) Internationale Anmeldenummer: PCT/EP2015/079630
(87) Internationale Veröffentlichungsnummer: WO 2016/096749

(56) Entgegenhaltungen:
- EP-A1- 0 496 046
- EP-A1- 2 354 012
- EP-A1- 2 420 460
- EP-A1- 2 746 165
- DE-A1-102012 108 700

## Beschreibung

Die Erfindung betrifft ein System mit einer Fördervorrichtung zum Bewegen von Portionen, die jeweils wenigstens eine von einem Lebensmittelprodukt, insbesondere Wurst, Käse, Schinken, Fleisch oder dergleichen, abgetrennte Scheibe umfassen. Die Scheiben können insbesondere mittels einer Aufschneidevorrichtung, vorzugsweise eines Hochgeschwindigkeits-Slicers, abgetrennt werden. Die Vorrichtung umfasst eine Mehrzahl individuell bewegbarer Transportmover zum Transport von Portionen, ein Bahnsystem für die Transportmover, in welchem die Transportmover entlang wenigstens einer vorgegebenen Bahn in einer Transportrichtung bewegbar sind, und eine Steuereinrichtung zum Steuern der Bewegung der Transportmover in dem Bahnsystem. Die Transportmover umfassen jeweils zumindest einen mit dem Bahnsystem zusammenwirkenden Läufer und wenigstens einen am Läufer angebrachten Träger für Portionen. Der Träger kann als Tray einer Verpackung ausgebildet sein oder einen Tray einer Verpackung umfassen. Alternativ kann der Träger auch einen Tray aufnehmen oder Portionen unmittelbar, d.h. ohne Tray, aufnehmen. Der Antrieb für die Transportmover kann beispielsweise als Linearmotor ausgebildet sein, insbesondere als linearer Synchronmotor oder als linearer Induktionsmotor.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind, wie es in dem hier in Rede stehenden Bereich des Transports von Lebensmittelportionen der Fall ist.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Vorzugsweise ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Das Transportsystem weist eine Mehrzahl von Transportmovern auf, deren Gesamtanzahl von der jeweiligen Anwendung abhängig ist. Es kann vorgesehen sein, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Portionen zu transportieren und gegebenenfalls Zusatzfunktionen durchzuführen wie z.B. eine Pufferung, ein Verteilen und/oder ein Zuordnen von Portionen.

Grundsätzlich wäre es denkbar, Portionen zum Verpacken einzeln durch einen Roboter mit einem Greifer, welcher auch Picker genannt wird, von Transportmovern abzunehmen und einzeln in eine Verpackungsvorrichtung einzulegen. Das Verpacken würde sich so vergleichsweise langsam gestalten. Es könnte also passieren, dass wesentlich mehr Portionen von der Aufschneidevorrichtung aufgeschnitten und von den Transportmovern transportiert werden, als zur selben Zeit durch einen einzelnen Roboter in die Verpackungsvorrichtung eingelegt werden können. Sollen hingegen mehrere Portionen zur gleichen Zeit verpackt werden, wäre es erforderlich, dass mehrere Roboter vorhanden sind. Dies wäre jedoch mit relativ hohen Kosten verbunden.

Die EP 0 496 046 A1 und EP 2 746 165 A1 offenbaren jeweils ein System gemäß dem Oberbegriff des Anspruchs 1.

Aufgrund eines vor diesem Hintergrund zu langsamen Verpackungsvorgangs würde die maximale Leistungsfähigkeit des Bahnsystems möglicherweise nicht ausgeschöpft.

Es ist daher eine Aufgabe der Erfindung, ein System mit einer Fördervorrichtung zum Bewegen von Portionen sowie ein entsprechendes Verfahren zu schaffen, die es ermöglichen, Portionen möglichst effizient zu verpacken.

Die Lösung dieser Aufgabe erfolgt durch eine Vorrichtung und ein Verfahren jeweils mit den Merkmalen der unabhängigen Ansprüche.

Erfindungsgemäß umfasst das System eine Transfereinrichtung zum Transferieren der Portionen von der Fördervorrichtung zur Verpackungsvorrichtung.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke, wie beispielsweise Frischfleischstücke, handeln.

Mit anderen Worten handelt es sich im Rahmen der Erfindung bei einer Portion um die im Hinblick auf die Transportaufgabe kleinste Einheit, die einerseits über eine bestimmte Strecke transportiert werden muss, und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen. Beispielsweise handelt es sich um Anforderungen hinsichtlich der Bildung von Formaten, wie sie für die jeweils vorgesehene Verpackungsvorrichtung bereitgestellt werden müssen.

Ein Transportmover kann eine oder mehrere Portionen transportieren. Alternativ ist es auch möglich, dass mehrere, insbesondere zwei, Transportmover gemeinsam eine Portion transportieren. Die Transportmover können dabei gewissermaßen gemeinsam auf dem Bahnsystem als Einheit bewegt werden. Auf diese Weise können auch größere Lasten, insbesondere schwerere und/oder flächenmäßig größere Portionen, auf dem Bahnsystem bewegt werden, als mit nur einem Transportmover.

Die Transfereinrichtung ist dazu ausgebildet, aus mehreren Portionen unterschiedlicher Transportmover einen ein- oder mehrzeiligen Formatsatz zu bilden und den Formatsatz als Ganzes an die Verpackungsvorrichtung zu transferieren. Es werden somit mehrere Portionen gleichzeitig an die Verpackungsvorrichtung transferiert. Die Portionen werden insbesondere an die Verpackungsvorrichtung übergeben und beispielsweise in Trays eingelegt. Die Geschwindigkeit beim Verpacken kann dadurch deutlich erhöht werden. Insbesondere kann das gesamte System bei hoher Leistung gefahren werden, ohne dass es zu Einflüssen auf die Fördervorrichtung aufgrund des Verpackungsvorgangs kommt.

Bevor die Portionen an die Verpackungsvorrichtung transferiert werden, wird ein Formatsatz gebildet. Der Formatsatz umfasst zumindest eine Zeile mehrerer nebeneinander angeordneter Portionen. Vorzugsweise ist der Formatsatz mehrzeilig ausgebildet, d.h. gewissermaßen in Form einer Matrix von Portionen. Vorzugsweise werden die Portionen an einem Raster ausgerichtet. Insbesondere kann auch das Fördersystem durch ein Steuern der Transportmover an eine bestimmte Position der Bahn zumindest teilweise zur Formatsatzbildung beitragen. Die Portionen können somit an eine bestimmte Übergabeposition bewegt werden, von welcher diese an die Transfereinrichtung übergeben werden. Die Transfereinrichtung kann insbesondere dazu ausgebildet sein, Portionen zu bewegen und zu formatieren. Von einem Formatieren ist im Rahmen der vorliegenden Offenbarung insbesondere ein Ausrichten, Gruppieren, Drehen oder dergleichen mit umfasst.

Die Portionen können sich auch bereits in Trays befinden, welche insbesondere auf dem Bahnsystem bewegt werden. Die Trays können von den Transportmovern an die Transfereinrichtung übergeben werden. Anschließend können die Trays ausgerichtet und an eine Verpackungsvorrichtung transferiert werden, in der sie beispielsweise verschlossen werden. Der Begriff "Portion" umfasst somit auch eine Portion, welche in einem Tray angeordnet ist.

Die Transfereinrichtung kann insbesondere auch zumindest einen Roboter mit einem Greifer, z.B. einen so genannten Picker, sowie ein Förderband umfassen. Der Roboter kann dabei Portionen einzeln von den Transportmovern abnehmen und auf ein gemeinsames Förderband ablegen. Ist ein Format auf dem Förderband erstellt, so kann dieses als Ganzes an die Verpackungsvorrichtung transferiert werden. Auch bei dieser Variante werden somit stets mehrere Portionen gleichzeitig verpackt.

Weiterbildungen der Erfindung sind auch den abhängigen Ansprüchen, der Beschreibung sowie den beigefügten Zeichnungen zu entnehmen.

Gemäß einer Ausführungsform umfasst die Transfereinrichtung einen Formatierer, welcher die Portionen unmittelbar von den Transportmovern aufnimmt. Die Portionen werden insbesondere bereits bei der Aufnahme durch die Transfereinrichtung formatiert. Insbesondere wird zur Formatierung kein Roboter mit einem Greifer eingesetzt.

Nach einer weiteren Ausführungsform ist der Formatsatz auf dem Formatierer bildbar. Der Formatierer umfasst beispielsweise eine ebene Fläche, auf der auch mehrere Portionen nebeneinander angeordnet sein können. Die Portionen gelangen insbesondere unmittelbar von den Transportmovern auf den Formatierer. Ein Roboter oder dergleichen ist hierbei nicht zwingend vorgesehen.

Der Formatierer kann die Portionen insbesondere ausrichten und eine oder mehrere Spuren bzw. Zeilen des Formatsatzes erstellen. Insbesondere können durch den Formatierer die Spur- und/oder Zeilenabstände der Portionen zueinander in einem Formatsatz festgelegt werden.

Gemäß einer weiteren Ausführungsform umfasst der Formatierer ein einteiliges Förderband, ein in mehrere individuell bewegbare Spuren unterteiltes Förderband oder mehrere separate Einzelförderbänder. Insbesondere kann ein einteiliges bzw. das in Spuren geteilte Förderband mindestens so breit sein wie eine Zeile des Formatsatzes. Vorzugsweise sind die separaten Einzelförderbänder parallel zueinander orientiert. Alternativ zu Förderbändern kann der Formatierer auch andere geeignete Förderer einsetzen. Förderbänder haben jedoch den Vorteil, dass diese insbesondere kostengünstig herstellbar sind.

Nach einer weiteren Ausführungsform umfasst die Transfereinrichtung eine Auflage für den Formatsatz. Insbesondere ist die Auflage mindestens so breit wie eine Zeile des Formatsatzes. Die Auflage kann, zumindest bei einigen Ausführungsformen, vorzugsweise mit dem Formatierer identisch sein. Bei anderen Ausführungsformen kann es sich bei der Auflage jedoch um ein zum Formatierer zusätzliches Bauteil handeln. Insbesondere ist die Auflage lang genug, um auch mehrere Zeilen bzw. Reihen an Portionen hintereinander aufnehmen zu können. Auf diese Weise kann eine Matrix oder ein Raster von Portionen entstehen. Auf der Auflage liegt somit insbesondere ein kompletter Formatsatz auf, ehe dieser als Ganzes an die Verpackungsvorrichtung transferiert wird.

Gemäß einer weiteren Ausführungsform umfasst die Auflage ein einteiliges Förderband oder ein in mehrere individuell bewegbare Spuren unterteiltes Förderband. Auch wenn Förderbänder zumindest unter bestimmten Bedingungen vorteilhaft sein können, ist es nicht zwingend, dass die Auflage ein Förderband umfasst. So sind auch andere geeignete Förderer grundsätzlich denkbar.

Nach einer weiteren Ausführungsform umfasst die Transfereinrichtung eine Abgabevorrichtung, mittels welcher die Auflage als Ganzes zu einem Abgabebereich, in welchem der Formatsatz an die Verpackungsvorrichtung abgebbar ist, bewegbar, insbesondere verschwenkbar, ist. Die Abgabevorrichtung kann insbesondere einen verschwenkbaren Roboterarm, eine Drehscheibe und/oder entsprechende Förderbänder umfassen, welche die Auflage bewegen. Der Roboterarm kann hierbei vergleichsweise einfach ausgebildet sein und lediglich eine einfache Bewegung durchführen. Komplexe Roboter mit Greifern, welche komplizierte Bewegungsabläufe ausführen und über eine entsprechende Sensorik verfügen, sind insbesondere nicht notwendig, grundsätzlich aber ebenfalls einsetzbar. Vorzugsweise kann die Bewegung ein Verschwenken um 90° umfassen. Der Winkel kann aber grundsätzlich beliebig sein und vorzugsweise abhängig von einem Winkel bei der Aufnahme der Portion gewählt werden. Insbesondere kann in diesem Schritt die Orientierung der Portion, d.h. längs oder quer, festgelegt werden und zwar je nach Anforderung der betreffenden Verpackungsvorrichtung. Ein Verschwenken um 90° sorgt nämlich für eine Umorientierung einer Portion beispielsweise aus einer Längs- in eine Querorientierung, und umgekehrt. Die Abgabevorrichtung kann hierbei je nach Bedarf entsprechend gewählt bzw. eingestellt werden.

Gemäß einer weiteren Ausführungsform ist zumindest ein oder jeder Transportmover an eine vorgebbare Portion eines Aufnahmebereichs, an dem die Transfereinrichtung die Portion aufnimmt, bewegbar. Aus Sicht des Bahnsystems lässt sich dieser Bereich auch als Abgabebereich bezeichnen, vorzugsweise in dem Fall, wenn der Transportmover selbst aktiv abgeben kann, z.B. mit Hilfe eines Bands oder einer Kippvorrichtung. Insbesondere dann, wenn mehrere Transportmover vorgesehen sind, kann anhand der Positionen auch der relative Abstand der Transportmover zueinander festgelegt werden. Es kann somit festgelegt werden, an welcher Position die Transportmover angehalten werden. Insbesondere kann die Position veränderbar sein. Die Position bzw. Veränderbarkeit der Position kann sich sowohl auf die Bahn und eine individuell vorgebbare Übergabestelle als auch auf eine zugeordnete Transfereinrichtung beziehen. Ferner ist es möglich, die Position bezüglich zumindest eines weiteren Transportmovers und/oder einer weiteren, insbesondere zugeordneten, Portion als Teilportion zu verändern. Auch können die Transportmover nacheinander an unterschiedlichen Positionen angehalten werden, um somit sukzessive eine Zeile des Formatsatzes zu füllen.

Nach einer weiteren Ausführungsform ist die Position an die Lage der Portion auf dem Transportmover anpassbar oder in Abhängigkeit von der Lage der Portion auf dem Transportmover veränderbar. Die Lage der Portion bezieht sich insbesondere entweder auf einen einzelnen Transportmover oder auf zumindest einen weiteren Transportmover, dessen Portion eine zugeordnete Teilportion oder eine zugeordnete Portion in einem, insbesondere gemeinsamen, Formatsatz bildet. Die Haltepunkte der Transportmover müssen sich also nicht nach den Transportmovern selbst, beispielsweise einem Mittelpunkt der Transportmover, richten, sondern können sich nach der Lage der Portion, die sich auf dem Transportmover befindet, richten. Da Portionen - und nicht die Transportmover selbst - an die Transfereinrichtung übergeben werden, sind somit die Portionen bereits an der richtigen Position eines späteren, d.h. des zu bildenden, Formatsatzes angeordnet.

Eine Positionierung oder eine Anpassung der Position eines Transportmovers anhand der Lage der Portion auf diesem Transportmover ist auch unabhängig von der Bildung eines Formatsatztes möglich, d.h. mehrere Portionen können relativ zueinander in einer gewünschten Weise positioniert werden, indem die Transportmover dieser Positionen entsprechend relativ zueinander positioniert werden.

Gemäß einer weiteren Ausführungsform ist eine Erfassungseinrichtung, insbesondere eine optische Einrichtung, vorzugsweise mit zumindest einer Kamera, vorgesehen, welche die Lage der Portion auf dem Transportmover ermittelt. Die durch die Erfassungseinrichtung ermittelten Positionsdaten können anschließend an die Steuereinrichtung weitergegeben werden, welche die Transportmover an der berechneten Position anhält.

Nach einer weiteren Ausführungsform ist die Position derart anpassbar oder veränderbar, dass die Portion auf den Transportmover entsprechend dem zu bildenden Formatsatz und entsprechend einer mit der Transfereinrichtung korrespondierenden Übergabeposition angeordnet ist. Die Übergabeposition entspricht hierbei der Position der Transportmover bei der Übergabe von Portionen an die Transfereinrichtung. Die Positionen werden somit insbesondere im Hinblick auf die Lage der Portionen im späteren Formatsatz angepasst. Vorzugsweise werden die Transportmover derart nebeneinander angehalten, dass die jeweils sich darauf befindlichen Portionen einen konstanten Abstand voneinander haben.

Gemäß einer weiteren Ausführungsform umfasst die Transfereinrichtung eine Ausrichtvorrichtung, welche die Portionen entsprechend dem zu bildenden Formatsatz anordnet. In diesem Fall muss die Position des Transportmovers nicht von der Lage der Portion abhängen bzw. die Position muss nicht absolut exakt sein, da die Lage der Portion anschließend noch korrigiert werden kann. Die Korrektur kann vorzugsweise in mindestens einer Richtung erfolgen. Insbesondere kann die Korrektur auch schon im Moment der Aufnahme auf die Transfereinrichtung und/oder bei der Abgabe erfolgen.

Nach einer weiteren Ausführungsform umfasst die Ausrichtvorrichtung ein Ausrichtband, welches dem Transportmover zugeordnet ist. Grundsätzlich sind jedoch beliebige geeignete Ausrichtvorrichtungen denkbar.

Gemäß einer weiteren Ausführungsform ist die Ausrichtvorrichtung seitlich und/oder parallel zur Förderrichtung bewegbar, insbesondere verschwenkbar und/oder verfahrbar, ausgebildet. Die Ausrichtvorrichtung kann sich somit bewegen, um die Portionen auf dem Weg zum Formatierer, zur Auflage und/oder zur Verpackungsvorrichtung auszurichten.

Nach einer weiteren Ausführungsform ist die Transfereinrichtung dazu ausgebildet, zeitgleich mehrere Portionen von den Transportmovern aufzunehmen. Insbesondere können mehrere Portionen gemeinsam aufgenommen werden. Hierbei können die Transportmover bereits auf der Bahn entsprechend dem späteren Formatsatz gruppiert und beispielsweise entsprechend der Lage der Portionen auf den Transportmovern in einem gewünschten Abstand positioniert werden.

In diesem Fall wird somit nicht eine Portion nach der anderen von der Transfereinrichtung aufgenommen, sondern mehrere Portionen gleichzeitig. Dadurch kann der Durchsatz an Portionen beim Verpacken erhöht werden.

Erfindungsgemäß sind die Abstände der Positionen der Transportmover zueinander derart anpassbar oder veränderbar, dass die Portionen von den Transportmovern entsprechend dem zu bildenden Formatsatz voneinander beabstandet sind. Es ergibt sich insbesondere ein portionsbezogener Abstand derTransportmover am Aufnahmebereich. Der Abstand bestimmt sich vorzugsweise aus dem Abstand von einer Portionsmitte zur nächsten Portionsmitte. Insbesondere kann ein gleichmäßiger Abstand zwischen den Portionen innerhalb einer Zeile, vorzugsweise innerhalb aller Zeilen, des Formatsatzes eingestellt werden. Dies entspricht insbesondere dem Spurabstand der Verpackungen.

Nach einer weiteren Ausführungsform ist jedem Transportmover ein insbesondere als Förderband ausgebildeter Einzelförderer des Formatierers zugeordnet. Die Portionen der unterschiedlichen Transportmover können insbesondere unabhängig voneinander vom Formatierer aufgenommen werden.

Gemäß einer weiteren Ausführungsform ist der Einzelförderer starr oder als Ausrichteinheit ausgebildet. Das Förderband kann insbesondere bewegt, beispielsweise verschwenkt oder verschoben, werden. Vorzugsweise können sämtliche Förderbänder unabhängig voneinander bewegt werden. Mögliche Fehllagen der Portionen auf den Transportmovern können auf diese Weise spurindividuell korrigiert werden. Vorzugsweise sind entweder alle Einzelförderer beweglich oder alle Einzelförderer starr.

Insbesondere können die Einzelförderer insgesamt und/oder in zumindest einem Endbereich quer zur Förderrichtung verschiebbar oder verschwenkbar ausgebildet sein. Vorzugsweise können Riemen und Bandgurte über die Länge eines Einzelförderers verschränkt sein.

Nach einer weiteren Ausführungsform ist die Transfereinrichtung dazu ausgebildet, Portionen nacheinander von den Transportmovern aufzunehmen. Die Aufnahme der Portionen erfolgt zeitlich versetzt, während die Übergabe des Formatsatzes an die Verpackungsvorrichtung hingegen für die den Formatsatz bildenden Portionen gleichzeitig erfolgt. Insbesondere kann dadurch während des Aufnehmens zumindest ein Teil des Formatsatzes erstellt werden.

Gemäß einer weiteren Ausführungsform sind die Transportmover nacheinander in dieselbe Position bewegbar. Die Position kann sich insbesondere auf die Bahn, die Portionslage und/oder auf eine zugeordnete Transfereinrichtung bzw. auf die Position auf der Transfereinrichtung beziehen. Eine Position wird somit sukzessive von den Transportmovern angefahren, d.h. die Aufnahme auf die Transfereinrichtung erfolgt stets an einem gleichen Übergabepunkt. Es können sich allerdings auch mehrere derartige Übergabepunkte aneinander reihen, zum Beispiel wenn an einem ersten Punkt Portionen mit einem ersten und an einem weiteren Punkt Portionen mit einer weiteren Eigenschaft übergeben werden.

Nach einer weiteren Ausführungsform ist die Transfereinrichtung als Ganzes, ein Formatierer der Transfereinrichtung und/oder eine Auflage der Transfereinrichtung zumindest in einer Dimension bewegbar, um Portionen unterschiedlicher Transportmover aufzunehmen. Insbesondere erfolgt die Bewegung in genau einer Dimension. Auf diese Weise ist es möglich, Portionen, welche nacheinander in dieselbe Position bewegt werden bzw. an beliebigen Positionen auf der Bahn verteilt sind, derart aufzunehmen, dass ein Formatsatz erstellt werden kann. Die Transportmover sind hierbei insbesondere passiv, d.h. die Formatsatzbildung erfolgt zumindest im Wesentlichen durch die Transfereinrichtung bzw. Komponenten hiervon. Die Transfereinrichtung, der Formatierer oder die Auflage kann insbesondere parallel zur Bahn bewegt werden, um somit nacheinander eine Zeile des Formatsatzes zu füllen.

Gemäß einer weiteren Ausführungsform ist eine Zeile des Formatsatzes auf der Transfereinrichtung parallel oder rechtwinklig zur Transportrichtung bildbar. Die Transportrichtung bezieht sich hierbei auf die Bewegung der Transportmover auf der Bahn. Insbesondere können die Portionen parallel zur Bahn oder senkrecht zur Bahn übergeben werden.

Die Erfindung betrifft auch ein Verfahren zum Verpacken von Portionen, die jeweils wenigstens eine von einem Lebensmittelprodukt, insbesondere mittels einer Aufschneidevorrichtung, insbesondere eines Hochleistungs-Slicers, abgetrennte Scheibe umfassen. Eine Förderrichtung transportiert Portionen mit einer Mehrzahl individuell bewegbarer Transportmover. Ein Bahnsystem bewegt die Transportmover entlang wenigstens einer vorgegebenen Bahn in einer Transportrichtung und eine Steuereinrichtung steuert die Bewegung der Transportmover in dem Bahnsystem. Eine Transfereinrichtung transferiert Portionen von der Fördervorrichtung an zumindest eine Verpackungsvorrichtung, wobei die Transfereinrichtung aus mehreren Portionen unterschiedlicher Transportmover einen ein- oder mehrzeiligen Formatsatz bildet und den Formatsatz als Ganzes an die Verpackungsvorrichtung transferiert, mittels welcher die Portionen verpackt werden.

Alle hier beschriebenen Ausführungsformen der Vorrichtung sind insbesondere dazu ausgebildet, nach dem hier beschriebenen Verfahren betrieben zu werden. Ferner können alle hier beschriebenen Ausführungsformen der Vorrichtung sowie alle hier beschriebenen Ausführungsformen des Verfahrens jeweils miteinander kombiniert werden.

Die Erfindung wird im Folgenden beispielhaft unter Bezugnahme auf die Zeichnungen beschrieben. Es zeigen:

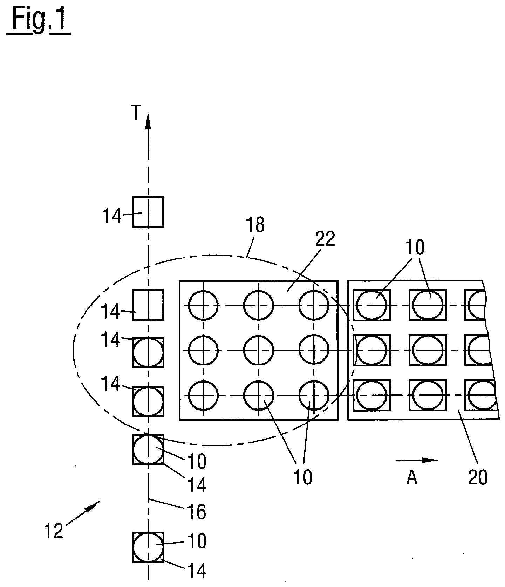

- Fig. 1 bis Fig. 11: schematische Draufsichten verschiedener Ausführungsformen des erfindungsgemäßen Systems.

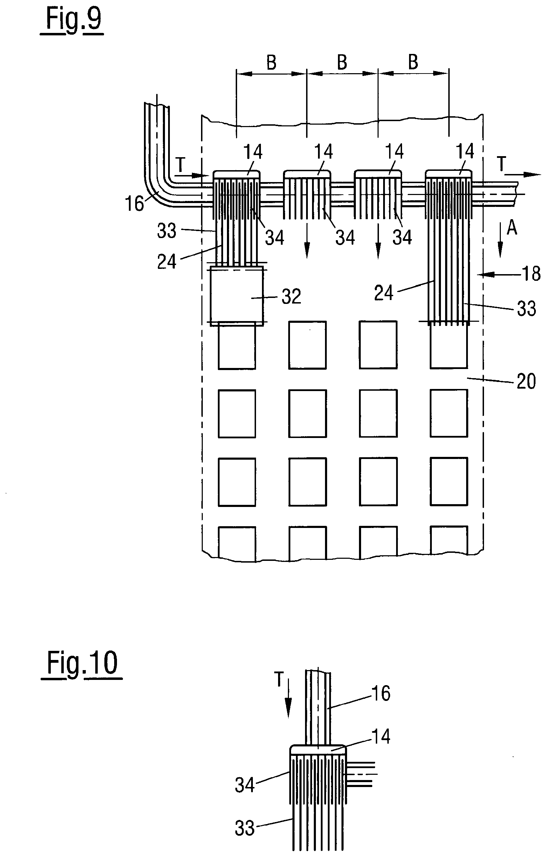

Zunächst wird festgestellt, dass die dargestellten Ausführungsformen rein beispielhafter Natur sind. Insbesondere können die Anzahl der dargestellten Transportmover und Spuren variieren. Auch können zur Aufnahme der Portionen auf dem Formatierer unterschiedliche Übergabemechanismen vorgesehen sein. Ein rechenartiger Greifer, wie er in den Fig. 9 bis Fig. 11 gezeigt ist, kann somit insbesondere durch andere geeignete Vorrichtungen, z.B. Förderbänder, ersetzt werden. Die Merkmale einer Ausführungsform können auch beliebig mit Merkmalen einer anderen Ausführungsform kombiniert werden.

In Fig. 1 ist eine Fördervorrichtung 12 zum Bewegen von Portionen 10 gezeigt. Die Fördervorrichtung 12 umfasst eine Vielzahl an Transportmovern 14 zum Transport der Portionen 10, welche sich in einer Bahn 16 in Transportrichtung T bewegen können.

Die Portionen 10 können mittels einer Transfereinrichtung 18, deren Arbeitsbereich beispielhaft als gestricheltes Oval dargestellt ist, zu einer Verpackungsvorrichtung 20 transferiert werden.

Die Transfereinrichtung 18 umfasst einen nicht dargestellten Roboter mit einem Picker sowie ein Förderband 22, auf dem ein Formatsatz gebildet wird. Der Picker kann Portionen 10 von den Transportmovern 14 abnehmen und auf das Förderband 22 in einem vorgegebenen Formatsatz ablegen. Der fertig gebildete Formatsatz kann nun mit Hilfe des Förderbands 22 als Ganzes an die Verpackungsvorrichtung 20 transferiert werden. Hierbei kann das Förderband 22 beispielsweise als Messerkantenband bzw. als sich schnell zurückziehendes Transportband ausgebildet sein. Aufgrund der Trägheit verbleiben die Portionen 10 an der entsprechenden Position, während sich das Förderband 22 darunter schnell zurückbewegt. Die Portionen 10 werden auf diese Weise in die Verpackungsvorrichtung 20 eingelegt. Die fertig verpackten Portionen 10 können in Abtransportrichtung A abtransportiert werden.

Portionen 10, welche von einer Aufschneidevorrichtung, insbesondere mit einem planetarisch und/oder rotatorisch umlaufenden Kreis- oder Sichelmesser, abgetrennt wurden, werden mit den Transportmovern 14 auf der Bahn 16 bewegt und an einer vorgegebenen Position angehalten. Dort greifen ein oder mehrere Roboter gleichzeitig Portionen 10 von den Transportmovern 14 ab. Die Portionen 10 werden anschließend in einem Formatsatz auf das Förderband 22 abgelegt und von dort als Ganzes an die Verpackungsvorrichtung 20 transferiert.

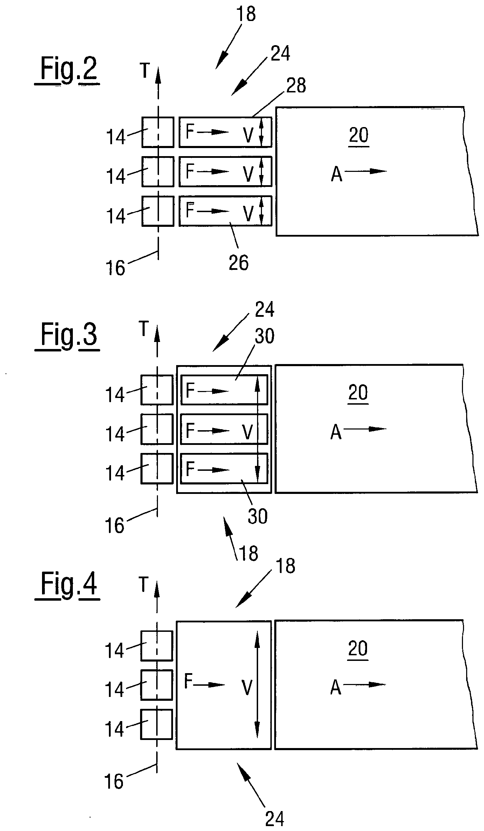

Bei den weiteren Ausführungsformen ist jeweils kein Roboter mit einem Picker vorgesehen. Gemäß den in Fig. 2 bis 4 dargestellten Ausführungsformen umfasst die Transfereinrichtung 18 einen Formatierer 24.

Gemäß Fig. 2 weist der Formatierer 24 drei parallele Einzelförderbänder 26 auf. Die Einzelförderbänder 26 können entweder starr oder aber als bewegliche Ausrichtvorrichtungen 28 ausgebildet sein und rechtwinklig bzw. schräg zu einer Förderrichtung F in Verstellrichtung V verstellt werden. Fehllagen der Portionen 10 auf den Transportmovern 14 können damit auf dem Weg zur Verpackungsvorrichtung 20 korrigiert werden. Es kann somit auf dem Formatierer 24 ein Formatsatz aus Portionen 10 gebildet werden, welcher als Ganzes an die Verpackungsvorrichtung 20 transferiert wird.

Gemäß Fig. 3 ist der Formatierer 24 als in mehrere individuell bewegbare Spuren 30 unterteiltes Förderband ausgebildet. Jede Spur 30 wird insbesondere von einem Einzelförderband 26 gebildet. Der Formatierer 24 kann hierbei als Ganzes in Verstellrichtung V verstellt werden, um eine eventuelle Fehllage einer Zeile von Portionen 10 auszugleichen.

Vorzugsweise werden die Transportmover 14 jedoch bereits an exakt vorgebbaren Positionen auf der Bahn 16 angehalten, insbesondere in bestimmten Abständen zwischen den Portionen 10 der unterschiedlichen Transportmover 14. Die Positionierung erfolgt hierbei anhand der Lage der Portionen 10 auf den Transportmovern 14. Die Lage der Portionen 10 kann mittels einer Erfassungseinrichtung festgestellt werden.

Idealerweise befinden sich die Portionen 10 bereits an der richtigen Position des späteren Formatsatzes. Eine Ausrichtvorrichtung 28 ist bei einer exakten Positionierung der Transportmover 14 anhand der Portionslagen daher nicht zwingend notwendig, kann aber gleichwohl z.B. vorgesehen sein, um bei Bedarf eine Ausrichtung vornehmen zu können.

Nach der in Fig. 4 gezeigten Ausführungsform ist der Formatierer 24 als Förderband ausgebildet. Das Förderband 24 kann sich entweder lediglich in Förderrichtung F bewegen. Alternativ ist jedoch zusätzlich eine Bewegung in Verstellrichtung V denkbar. Die Portionen 10 werden hierbei von einem gemeinsamen Förderband 24 aufgenommen und können sich insbesondere aufgrund der exakten Positionierung der Transportmover 14 bereits im richtigen Abstand voneinander befinden.

Eine Verstellbarkeit in Verstellrichtung V eines Einzelförderbands 26 bzw. eines gemeinsamen Förderbands 24 ist insbesondere auch bei einer Variante vorteilhaft, bei der sämtliche Transportmover 14 nacheinander an dieselbe Position verfahren werden bzw. sich an beliebigen Positionen in der Bahn befinden. Hierbei kann der Formatierer 24 in einer Dimension in Verstellrichtung V bewegt werden, um die Portionen 10 an der richtigen Position für den späteren Formatsatz abzuholen. Die Verstellrichtung V kann hierbei rechtwinklig zur Förderrichtung F sein.

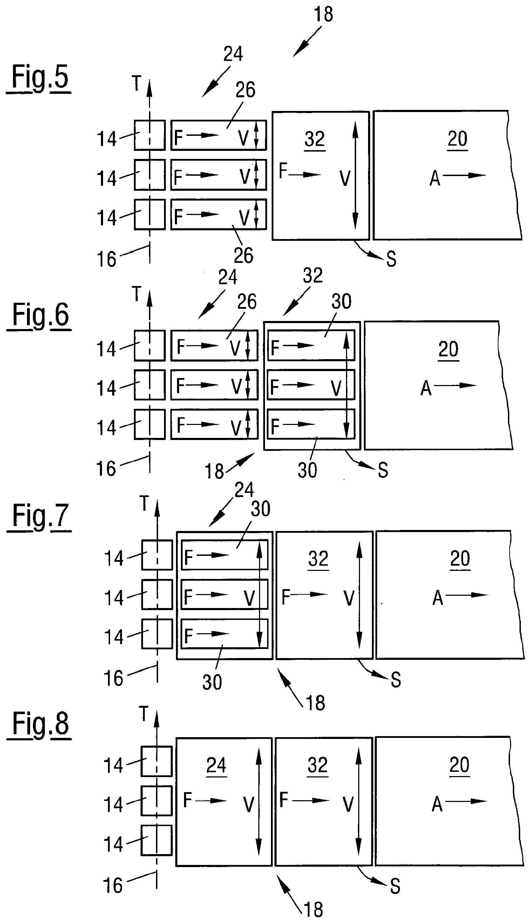

Wie in den Fig. 5 bis 8 gezeigt ist, kann die Transfereinrichtung 18 zusätzlich zum Formatierer 24 auch eine Auflage 32 umfassen. Bei den vorherigen Ausführungsformen entspricht der Formatierer 24 hingegen der Auflage 32 bzw. wird die Auflage 32 von dem Formatierer 24 gebildet, weshalb die hier gemachten Ausführungen zur Auflage 32 auch für diese Varianten gelten können.

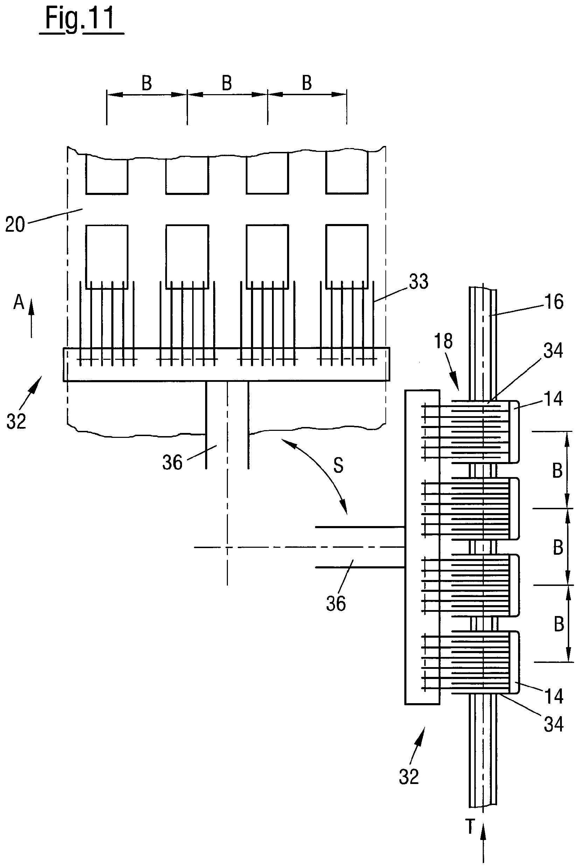

Auf der Auflage 32 liegt insbesondere ein fertig gebildeter Formatsatz auf, bevor dieser als Ganzes an die Verpackungsvorrichtung 20 transferiert wird. Auch die Auflage 32 kann analog zum Formatierer 24 als einteiliges Förderband oder als in individuell bewegbare Spuren 30 unterteilte oder segmentierte Auflage 32 ausgebildet sein. Jede Spur 30 kann wiederum von einem Einzelförderband 26 gebildet werden. Auch die Beweglichkeit in Verstellrichtung V kann gegeben sein. Ist der Auflage 32 ein Formatierer 24 vorgeschaltet, so kann entweder der Formatierer 24 oder die Auflage 32 in Verstellrichtung V verstellt werden. Alternativ ist es auch möglich, dass sowohl der Formatierer 24 als auch die Auflage 32 in Verstellrichtung V verstellt werden kann. Ferner ist es möglich, dass die Auflage 32 in Schwenkrichtung S verschwenkt wird, um die Portionen 10, beispielsweise um 90° versetzt, an die Verpackungsvorrichtung 20 abzugeben. Hierauf wird im Zusammenhang mit Fig. 11 noch genauer eingegangen.

In Fig. 9 sind zwei verschiedene Möglichkeiten zur Aufnahme der Portionen 10 auf einen Formatierer 24 dargestellt.

Im linken Teil der Fig. 9 wird in einer ersten Variante die Portion 10 über Riemen 33 abgekämmt. Die Übergabe erfolgt hierbei zunächst an die Auflage 32. Von der Auflage 32 wird die Portion 10 schließlich an die Verpackungsvorrichtung 20 transferiert.

Eine Alternative ist auf der rechten Seite der Fig. 9 dargestellt, wonach die Portionen 10 abgekämmt und mit Hilfe von Riemen 33, welche den Formatierer 24 darstellen, direkt in die Verpackungsvorrichtung 20 eingelegt. Der Formatierer 24 ist hierbei mit der Auflage 32 identisch.

Lediglich zur Vermeidung einer separaten Figur sind hier in Fig. 9 gleichzeitig die vorstehend erläuterten Varianten gezeigt. Innerhalb einer jeweiligen konkreten Ausführungsform arbeiten alle Formatierer 24 einer Gesamt-Transfereinrichtung bevorzugt nach demselben Prinzip, also entweder wie links in Fig. 9 dargestellt oder wie rechts in Fig. 9 gezeigt, wobei grundsätzlich aber auch verschiedene Mechanismen oder Prinzipien für die Formatierer 24 innerhalb einer Transfereinrichtung 18 grundsätzlich denkbar sind.

Um die Portionen 10 aufnehmen zu können, weist der Transportmover 14 einen gitterförmigen Träger 34 auf. Der Begriff "gitterförmig" ist breit zu verstehen. So sind beispielsweise auch ein Rechen, mehrere parallele Stäbe und/oder eine Fläche mit Durchbrechungen mit umfasst. Durch die gitterförmige Ausgestaltung des Trägers 34 können darauf befindliche Portionen 10 mit Hilfe eines ebenfalls ein Gitter umfassenden Greifers bzw. mit Hilfe der Riemen 33 entnommen werden. Auch kann die Portionslage beim Untergreifen des Trägers 34 korrigiert werden, indem der Greifer z.B. nur bis zu einer bestimmten Position eingreift. Die Portionen 10 können insbesondere durch ein Band bzw. Riemen 33 schräg nach oben abgekämmt werden. Vorzugsweise weist der Transportmover 14 einen Halter für den Träger 34 auf, der unterhalb des Gitters flächig und durchgehend ausgebildet ist, so dass vom Gitter auf den Halter fallende Verschmutzungen aufgefangen werden und nicht auf die Bahn 16 gelangen.

Die Riemen 33 können folglich in den gitterförmigen Träger 34 eingreifen und die Portionen 10 zur Verpackungsvorrichtung 20 transportieren.

Zur Übergabe können die Transportmover 14 an exakten Positionen der Bahn 16 angehalten werden. Insbesondere können die Transportmover 14 in einem bestimmten Abstand B der Portionen 10 zueinander gestoppt werden. Die Formatierung der Portionen 10 erfolgt hierbei bereits teilweise mit Hilfe des Bahnsystems. Nach der Formatierung können die Portionen 10 gemeinsam an den Formatierer 24 bzw. die Auflage 32 übergeben werden, so dass zumindest ein einzeiliger Formatsatz gemeinsam an die Verpackungsvorrichtung 20 transferiert wird.

Die Portionen 10 können rechtwinklig zur Transportrichtung T abgegeben werden. Alternativ ist es auch möglich, die Portionen 10, wie in Fig. 10 gezeigt, parallel zur Transportrichtung T abzugeben.

In Fig. 11 ist eine Ausführungsform dargestellt, bei der die Auflage 32 in Schwenkrichtung S verschwenkt werden kann. Die Transportmover 14 werden zunächst an exakten Positionen bezüglich der Lage der Portionen 10 positioniert. Mit Hilfe der Riemen 33 werden die Portionen 10 anschließend von den Trägern 34 der Transportmover 14 abgenommen. Auf der Auflage 32 befindet sich nun ein einzeiliger Formatsatz. Die Auflage 32 wird in Schwenkrichtung S zur Verpackungsvorrichtung 20 um 90° verschwenkt. Der Formatsatz wird anschließend gleichzeitig an die Verpackungsvorrichtung 20 transferiert.

Zum Verschwenken der Auflage 32 ist eine Abgabevorrichtung 36 vorgesehen, welche einen Roboterarm umfassen kann. Der Abstand B der Portionen 10 in der Verpackungsvorrichtung 20 zueinander entspricht dem Abstand B, welchen die Portionen 10 bereits auf der Bahn 16 vor der Aufnahme durch die Transfereinrichtung 18 hatten.

Erfindungsgemäß können mehrere Portionen 10 gleichzeitig an die Verpackungsvorrichtung 20 übergeben werden. Dies ist auch ohne den Einsatz von kostenintensiven Robotern, insbesondere ohne so genannte "Picker", möglich.

### Bezugszeichenliste

- 10: Portion
- 12: Fördervorrichtung
- 14: Transportmover
- 16: Bahn
- 18: Transfereinrichtung
- 20: Verpackungsvorrichtung
- 22: Förderband
- 24: Formatierer, Förderband
- 26: Einzelförderband
- 28: Ausrichtvorrichtung
- 30: Spur
- 32: Auflage
- 33: Riemen
- 34: Träger
- 36: Abgabevorrichtung, Roboterarm

- T: Transportrichtung
- A: Abtransportrichtung
- F: Förderrichtung
- V: Verstellrichtung
- S: Schwenkrichtung
- B: Abstand

## Patentansprüche

1. System mit
einer Fördervorrichtung (12) zum Bewegen von Portionen (10), die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen,
zumindest einer Verpackungsvorrichtung (20) zum Verpacken der Portionen (10), und
zumindest einer Transfereinrichtung (18) zum Transferieren der Portionen (10) von der Fördervorrichtung (12) zur Verpackungsvorrichtung (20), wobei die Fördervorrichtung (12)
eine Mehrzahl individuell bewegbarer Transportmover (14) zum Transport von Portionen (10),
ein Bahnsystem für die Transportmover (14), in welchem die Transportmover (14) entlang wenigstens einer vorgegebenen Bahn (16) in einer Transportrichtung (T) bewegbar sind, und
eine Steuereinrichtung zum Steuern der Bewegungen der Transportmover (14) in dem Bahnsystem
umfasst,
wobei die Transportmover (14) jeweils zumindest einen mit dem Bahnsystem zusammenwirkenden Läufer und wenigstens einen am Läufer angebrachten Träger für Portionen (10) umfassen, und
wobei die Transfereinrichtung (18) dazu ausgebildet ist, aus mehreren Portionen (10) unterschiedlicher Transportmover (14) einen ein- oder mehrzeiligen Formatsatz zu bilden und den Formatsatz als Ganzes an die Verpackungsvorrichtung (20) zu transferieren,
**dadurch gekennzeichnet, dass**
die Abstände (B) der Positionen der Transportmover (14) zueinander derart anpassbar oder veränderbar sind, dass die Portionen (10) auf den Transportmovern (14) entsprechend dem zu bildenden Formatsatz voneinander beabstandet sind.

2. System nach Anspruch 1,
**dadurch gekennzeichnet, dass**
die Transfereinrichtung (18) einen Formatierer (24) umfasst, welcher die Portionen (10) unmittelbar von den Transportmovern (14) aufnimmt, insbesondere wobei der Formatsatz auf dem Formatierer (24) bildbar ist und/oder insbesondere wobei der Formatierer (24) ein einteiliges Förderband, ein in mehrere individuell bewegbare Spuren (30) unterteiltes Förderband oder mehrere separate Einzelförderbänder (26) umfasst.

3. System nach Anspruch 1 oder 2,
**dadurch gekennzeichnet, dass**
die Transfereinrichtung (18) eine Auflage (32) für den Formatsatz umfasst, insbesondere wobei die Auflage (32) ein einteiliges Förderband oder ein in mehrere individuell bewegbare Spuren (30) unterteiltes Förderband umfasst.

4. System nach Anspruch 3,
**dadurch gekennzeichnet, dass**
die Transfereinrichtung (18) eine Abgabevorrichtung (36) umfasst, mittels welcher die Auflage (32) als Ganzes zu einem Abgabebereich, in dem der Formatsatz an die Verpackungsvorrichtung (20) abgebbar ist, bewegbar, insbesondere verschwenkbar, ist.

5. System nach einem der vorhergehenden Ansprüche,
**dadurch gekennzeichnet, dass**
zumindest ein oder jeder Transportmover (14) an eine vorgebbare Position eines Aufnahmebereichs, an dem die Transfereinrichtung (18) die Portion (10) aufnimmt, bewegbar ist, wobei insbesondere die Position veränderbar ist.

6. System nach Anspruch 5,
**dadurch gekennzeichnet, dass**
die Position an die Lage der Portion (10) auf dem Transportmover (14) anpassbar oder in Abhängigkeit von der Lage der Portion (10) auf dem Transportmover (14) veränderbar ist, insbesondere wobei eine Erfassungseinrichtung, insbesondere eine optische Einrichtung, vorzugsweise mit zumindest einer Kamera, vorgesehen ist, welche die Lage der Portion (10) auf dem Transportmover (14) ermittelt.

7. System nach einem Ansprüche 5 oder 6,
**dadurch gekennzeichnet, dass**
die Position derart anpassbar oder veränderbar ist, dass die Portion (10) auf dem Transportmover (14) entsprechend dem zu bildenden Formatsatz und/oder entsprechend einer mit der Transfereinrichtung (18) korrespondierenden Übergabeposition angeordnet ist.

8. System nach einem der vorhergehenden Ansprüche,
**dadurch gekennzeichnet, dass**
die Transfereinrichtung (18) eine Ausrichtvorrichtung (28) umfasst, welche die Portionen (10) entsprechend dem zu bildenden Formatsatz anordnet, insbesondere wobei die Ausrichtvorrichtung (28) ein Ausrichtband umfasst, welches dem Transportmover (14) zugeordnet ist und/oder insbesondere wobei die Ausrichtvorrichtung (28) seitlich und/oder parallel zur Förderrichtung (F) bewegbar, insbesondere verschwenkbar und/oder verfahrbar, ausgebildet ist.

9. System nach einem der vorhergehenden Ansprüche,
**dadurch gekennzeichnet, dass**
die Transfereinrichtung (18) dazu ausgebildet ist, zeitgleich mehrere Portionen (10) von den Transportmovern (14) aufzunehmen.

10. System nach einem der vorhergehenden Ansprüche,
**dadurch gekennzeichnet, dass**
jedem Transportmover (14) ein insbesondere als Förderband ausgebildeter Einzelförderer (26) des Formatierers (24) zugeordnet ist, insbesondere wobei der Einzelförderer (26) starr oder als Ausrichtvorrichtung (28) ausgebildet ist.

11. System nach einem der Ansprüche 1 bis 8,
**dadurch gekennzeichnet, dass**
die Transfereinrichtung (18) dazu ausgebildet ist, Portionen (10) nacheinander von den Transportmovern (14) aufzunehmen, insbesondere um während des Aufnehmens zumindest einen Teil eines Formatsatzes zu erstellen, insbesondere wobei die Transportmover (14) nacheinander in dieselbe Position bewegbar sind.

12. System nach einem der vorhergehenden Ansprüche,
**dadurch gekennzeichnet, dass**
die Transfereinrichtung (18) als Ganzes, ein Formatierer (24) der Transfereinrichtung (18) und/oder eine Auflage (32) der Transfereinrichtung (18) zumindest in einer Dimension bewegbar ist, um Portionen (10) unterschiedlicher Transportmover (14) aufzunehmen.

13. System nach einem der vorhergehenden Ansprüche,
**dadurch gekennzeichnet, dass**
eine Zeile des Formatsatzes auf der Transfereinrichtung (18) parallel oder rechtwinklig zur Transportrichtung (T) bildbar ist.

14. Verfahren zum Verpacken von Portionen (10), die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen,
bei dem
eine Fördervorrichtung (12) Portionen (10) mit einer Mehrzahl individuell bewegbarer Transportmover (14) transportiert,
ein Bahnsystem die Transportmover (14) entlang wenigstens einer vorgegebenen Bahn (16) in einer Transportrichtung (T) bewegt und eine Steuereinrichtung die Bewegungen der Transportmover (14) in dem Bahnsystem steuert, und
eine Transfereinrichtung (18) Portionen (10) von der Fördervorrichtung (12) an zumindest eine Verpackungsvorrichtung (20) transferiert,
wobei die Transfereinrichtung (18) aus mehreren Portionen (10) unterschiedlicher Transportmover (14) einen ein- oder mehrzeiligen Formatsatz bildet und den Formatsatz als Ganzes an die Verpackungsvorrichtung (20) transferiert, mittels welcher die Portionen (10) verpackt werden, wobei die Abstände (B) der Positionen der Transportmover (14) zueinander derart angepasst oder verändert werden, dass die Portionen (10) auf den Transportmovern (14) entsprechend dem zu bildenden Formatsatz voneinander beabstandet sind.

## Claims

1. A system comprising
a conveying apparatus (12) for moving portions (10) which each comprise at least one slice cut off from a food product, in particular by means of a slicing apparatus, in particular by means of a high-speed slicer;
at least one packaging apparatus (20) for packaging the portions (10); and at least one transfer device (18) for transferring the portions (10) from the conveying apparatus (12) to the packaging apparatus (20),
wherein the conveying apparatus (12) comprises
a plurality of individually movable transport movers (14) for the transport of portions (10);
a path system for the transport movers (14) in which the transport movers (14) are movable in a transport direction (T) along at least one predefined path (16); and
a control device for controlling the movements of the transport movers (14) in the path system;
wherein the transport movers (14) each comprise at least one rotor cooperating with the path system and at least one carrier for portions (10) attached to the rotor; and
wherein the transfer device (18) is configured to form a single-line or multi-line format set from a plurality of portions (10) of different transport movers (14) and to transfer the format set as a whole to the packaging apparatus (20),
**characterized in that**
the spacings (B) of the positions of the transport movers (14) from one another are adaptable or variable such that the portions (10) on the transport movers (14) are spaced apart from one another in accordance with the format set to be formed.

2. A system in accordance with claim 1,
**characterized in that**
the transfer device (18) comprises a formatter (24) which picks up the portions (10) directly from the transport movers (14), with the format set in particular being formable on the formatter (24), and/or with the formatter (24) in particular comprising a single-part conveyor belt; a conveyor belt divided into a plurality of individually movable tracks (30); or a plurality of separate individual conveyor belts (26).

3. A system in accordance with claim 1 or claim 2,
**characterized in that**
the transfer device (18) comprises a support (32) for the format set, with the support (32) in particular comprising a single-part conveyor belt or a conveyor belt divided into a plurality of individually movable tracks (30).

4. A system in accordance with claim 3,
**characterized in that**
the transfer device (18) comprises a dispensing apparatus (36) by means of which the support (32) is movable, in particular pivotable, as a whole to a dispensing region in which the format set is dispensable to the packaging apparatus (20).

5. A system in accordance with any one of the preceding claims,
**characterized in that**
at least one or each transport mover (14) is movable to a predefinable position of a pick-up region at which the transfer device (18) picks up the portion (10), with the position in particular being variable.

6. A system in accordance with claim 5,
**characterized in that**
the position is adaptable to the location of the portion (10) on the transport mover (14) or is variable in dependence on the location of the portion (10) on the transport mover (14), with a detection device, in particular an optical device, preferably having at least one camera, in particular being provided that determines the location of the portion (10) on the transport mover (14).

7. A system in accordance with claim 5 or claim 6,
**characterized in that**
the position is adaptable or variable such that the portion (10) is arranged on the transport mover (14) in accordance with the format set to be formed and/or in accordance with a transfer position corresponding to the transfer device (18).

8. A system in accordance with any one of the preceding claims,
**characterized in that**
the transfer device (18) comprises an alignment apparatus (28) which arranges the portions (10) in accordance with the format set to be formed, with the alignment apparatus (28) in particular comprising an alignment belt which is associated with the transport mover (14), and/or with the alignment apparatus (28) in particular being movable, in particular pivotable and/or travelable, laterally and/or in parallel with the conveying direction (F).

9. A system in accordance with any one of the preceding claims,
**characterized in that**
the transfer device (18) is configured to pick up a plurality of portions (10) from the transport movers (14) simultaneously.

10. A system in accordance with any one of the preceding claims,
**characterized in that**
an individual conveyor (26) of the formatter (24), in particular configured as a conveyor belt, is associated with each transport mover (14), with the individual conveyor (26) in particular being configured as rigid or as an alignment apparatus (28).

11. A system in accordance with any one of the claims 1 to 8,
**characterized in that**
the transfer device (18) is configured to pick up portions (10) consecutively from the transport movers (14), in particular to prepare at least a part of a format set during the picking up, with the transport movers (14) in particular being movable after one another into the same position.

12. A system in accordance with any one of the preceding claims,
**characterized in that**
the transfer device (18) as a whole, a formatter (24) of the transfer device (18) and/or a support (32) of the transfer device (18) is/are movable in at least one dimension to pick up portions (10) of different transport movers (14).

13. A system in accordance with any one of the preceding claims,
**characterized in that**
a line of the format set on the transfer device (18) is formable in parallel with or at a right angle to the transport direction (T).

14. A method of packaging portions (10) which each comprise at least one slice cut off from a food product, in particular by means of a slicing apparatus, in particular by means of a high-speed slicer,
in which
a conveying apparatus (12) transports portions (10) using a plurality of individually movable transport movers (14);
a path system moves the transport movers (14) along at least one predefined path (16) in a transport direction (T) and a control device controls the movements of the transport movers (14) in the path system; and
a transfer device (18) transfers portions (10) from the conveying apparatus (12) to at least one packaging apparatus (20),
wherein the transfer device (18) forms a single-line or multi-line format set from a plurality of portions (10) of different transport movers (14) and transfers the format set as a whole to the packaging apparatus (20) by means of which the portions (10) are packaged, with the spacings (B) of the positions of the transport movers (14) from one another being adapted or varied such that the portions (10) on the transport movers (14) are spaced apart from one another in accordance with the format set to be formed.

## Revendications

1. Système comportant
un dispositif de convoyage (12) pour déplacer des portions (10) qui comprennent chacune au moins une tranche séparée d'un produit alimentaire, en particulier à l'aide d'un dispositif de coupe, en particulier à l'aide d'une trancheuse à haute performance,
au moins un dispositif d'emballage (20) pour emballer les portions (10), et au moins un moyen de transfert (18) pour transférer les portions (10) depuis le dispositif de convoyage (12) jusqu'au dispositif d'emballage (20), dans lequel
le dispositif de convoyage (12) comprend
une pluralité d'organes de transport (14) mobiles individuellement pour transporter des portions (10),
un système de voie pour les organes de transport (14), dans lequel les organes de transport (14) sont mobiles le long d'au moins une voie donnée (16) dans une direction de transport (T), et
un moyen de commande pour commander les mouvements des organes de transport (14) dans le système de voie,
les organes de transport (14) comprennent chacun au moins un curseur coopérant avec le système de voie, et au moins un support pour des portions (10) monté sur le curseur, et
le moyen de transfert (18) est réalisé pour former un lot de format à une ou à plusieurs lignes à partir de plusieurs portions (10) de différents organes de transport (14) et pour transférer le lot de format dans son ensemble au dispositif d'emballage (20),
**caractérisé en ce que**
les distances (B) des positions des organes de transport (14) les unes des autres sont adaptables ou variables de telle sorte que les portions (10) sur les organes de transport (14) sont espacées les unes des autres en correspondance du lot de format à former.

2. Système selon la revendication 1,
**caractérisé en ce que**
le moyen de transfert (18) comprend un formateur (24) qui reprend les portions (10) directement des organes de transport (14), en particulier le lot de format pouvant être formé sur le formateur (24) et/ou en particulier le formateur (24) comprend une bande de convoyage d'une seule pièce, une bande de convoyage subdivisée en plusieurs voies (30) mobiles individuellement, ou plusieurs bandes de convoyage individuelles séparées (26).

3. Système selon la revendication 1 ou 2,
**caractérisé en ce que**
le moyen de transfert (18) comprend un support (32) pour le lot de format, en particulier le support (32) comprenant une bande de convoyage d'une seule pièce ou une bande de convoyage subdivisée en plusieurs voies (30) mobiles individuellement.

4. Système selon la revendication 3,
**caractérisé en ce que**
le moyen de transfert (18) comprend un dispositif de remise (36) permettant de déplacer, en particulier de basculer, le support (32) dans son ensemble jusqu'à une zone de remise dans laquelle le lot de format peut être remis au dispositif d'emballage (20).

5. Système selon la revendication 1 ou 2,
**caractérisé en ce que**
au moins un ou chaque organe de transport (14) est déplaçable jusqu'à une position donnée de la zone de réception au niveau de laquelle le moyen de transfert (18) reçoit la portion (10), la position étant en particulier variable.

6. Système selon la revendication 5,
**caractérisé en ce que**
la position est adaptable à la situation de la portion (10) sur l'organe de transport (14) ou est variable en fonction de la situation de la portion (10) sur l'organe de transport (14), et en particulier il est prévu un moyen de détection, en particulier un moyen optique, pourvu de préférence d'au moins une caméra qui détermine la situation de la portion (10) sur l'organe de transport (14).

7. Système selon l'une des revendications 5 ou 6,
**caractérisé en ce que**
la position est adaptable ou variable de telle sorte que la portion (10) sur l'organe de transport (14) est agencée en correspondance du lot de format à former et/ou en correspondance d'une position de remise correspondant au moyen de transfert (18).

8. Système selon l'une des revendications précédentes,
**caractérisé en ce que**
le moyen de transfert (18) comprend un dispositif d'orientation (28) qui agence les portions (10) en correspondance du lot de format à former, le dispositif d'orientation (28) comprenant en particulier une bande d'orientation qui est associée à l'organe de transport (14), et/ou le dispositif d'orientation (28) étant réalisé en particulier de façon mobile, en particulier en basculement et/ou en translation, latéralement et/ou parallèlement à la direction de convoyage (F).

9. Système selon l'une des revendications précédentes,
**caractérisé en ce que**
le moyen de transfert (18) est réalisé pour recevoir simultanément plusieurs portions (10) en provenance des organes de transport (14).

10. Système selon l'une des revendications précédentes,
**caractérisé en ce que**
un convoyeur individuel (26), réalisé en particulier sous forme de bande de convoyage, du formateur (24) est associé à chaque organe de transport (14), en particulier le convoyeur individuel (26) étant réalisé rigide ou sous forme de dispositif d'orientation (28).

11. Système selon l'une des revendications 1 à 8,
**caractérisé en ce que**
le moyen de transfert (18) est réalisé pour recevoir des portions (10) successivement en provenance des organes de transport (14), en particulier pour former au moins une partie d'un lot de format pendant l'opération de réception, en particulier les organes de transport (14) étant mobiles successivement jusque dans la même position.

12. Système selon l'une des revendications précédentes,
**caractérisé en ce que**
le moyen de transfert (18) dans son ensemble, un formateur (24) du moyen de transfert (18) et/ou un support (32) du moyen de transfert (18) est mobile dans au moins une dimension pour recevoir des portions (10) de différents organes de transport (14).

13. Système selon l'une des revendications précédentes,
**caractérisé en ce que**
une ligne du lot de format peut être formée sur le moyen de transfert (18) parallèlement ou à angle droit par rapport à la direction de transport (T).

14. Procédé pour emballer des portions (10) qui comprennent chacune au moins une tranche séparée d'un produit alimentaire, en particulier à l'aide d'un dispositif de coupe, en particulier à l'aide d'une trancheuse à haute performance,
dans lequel
un dispositif de convoyage (12) transporte des portions (10) par une pluralité d'organes de transport (14),
un système de voie déplace les organes de transport (14) le long d'au moins une voie donnée (16) dans une direction de transport (T), et un moyen de commande commande les mouvements des organes de transport (14) dans le système de voie, et
un moyen de transfert (18) transfère des portions (10) depuis le dispositif de convoyage (12) à au moins un dispositif d'emballage (20),
le moyen de transfert (18) forme un lot de format à une ou à plusieurs lignes à partir desdites plusieurs portions (10) de différents organes de transport (14) et transfère le lot de format dans son ensemble au dispositif d'emballage (20) à l'aide duquel les portions (10) sont emballées, les distances (B) des positions des organes de transport (14) les unes des autres étant adaptables ou variables de telle sorte que les portions (10) sur les organes de transport (14) sont espacées les unes des autres en correspondance du lot de format à former.
